(19) Europäisches Patentamt
European Patent Office
Office européen des brevets

(11) **EP 1 302 753 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(51) Int Cl.:
***G01D 5/244*** *(2006.01)*

(21) Anmeldenummer: **02000862.9**

(22) Anmeldetag: **15.01.2002**

(54) **Positionsgeber-Überwachungsverfahren**

Monitoring method for a position detecting device

Méthode de surveillance pour un détecteur de position

(84) Benannte Vertragsstaaten:
**AT BE CH CY DE DK ES FI FR GB GR IE IT LI LU MC NL PT SE TR**

(30) Priorität: **10.10.2001 DE 10149863**

(43) Veröffentlichungstag der Anmeldung:
**16.04.2003 Patentblatt 2003/16**

(73) Patentinhaber: **Baumüller Anlagen-Systemtechnik GmbH & Co. KG**
**90482 Nürnberg (DE)**

(72) Erfinder: **Heller, Ulrich**
**90429 Nürnberg (DE)**

(74) Vertreter: **Götz, Georg Alois et al**
**Intellectual Property IP-GÖTZ**
**Patent- und Rechtsanwälte**
**Postfach 35 45**
**90017 Nürnberg (DE)**

(56) Entgegenhaltungen:
**EP-A- 0 836 080     US-A- 5 134 404**
**US-A- 5 463 393**

• **PATENT ABSTRACTS OF JAPAN vol. 014, no. 191 (P-1038), 18. April 1990 (1990-04-18) & JP 02 036313 A (FANUC LTD), 6. Februar 1990 (1990-02-06)**

## Beschreibung

Die Erfindung betrifft ein Verfahren zur Echtzeit-Überwachung von Amplituden gegeneinander phasenverschobener, sinus- und cosinusartiger Meßsignale eines inkrementalen Positionsgebers oder Drehmelders, mit folgenden Verfahrensschritten:

a) zyklische Abtastung und rechnerische Verarbeitung und Verknüpfung der Meßsignale zur Bildung eines den Meßwertamplituden gemeinsamen Kontrollwerts (m) pro Abtastzyklus,
b) Bestimmung eines oberen und eines unteren Grenzwerts anhand einer statistischen Bewertung mehrerer vorher abgespeicherter Kontrollwerte
c) Vergleich des jeweiligen Kontrollwerts mit dem oberen und dem unteren Grenzwert zu Überwachungszwecken
d) Generierung eines Fehlersignals, wenn der Kontrollwert den oder die Grenzwerte einmal oder mehrmals überschreitet.

Ferner betrifft die Erfindung ein Computerprogramm mit Programmcodemitteln zur Ausführung dieses Verfahrens. Weiter betrifft die Erfindung ein digitales Schaltwerk, das programm- und/oder schaltungstechnisch zur Ausführung des Geber-Überwachungsverfahrens eingerichtet ist. Weiter betrifft die Erfindung einen digitalen Antriebsregler mit dem Schaltwerk und einem Softwaremodul zur Ausführung des Geber-Überwachungsverfahrens.

Der Einsatz inkrementaler Positionsgeber, welche zueinander um 90° phasenverschobene Sinus- und Cosinus-Meßsignale ausgeben, ist insbesondere zum Betrieb von Antriebsregelkreisen allgemein bekannt (vgl. z.B. Patentschrift DE 43 31 151 C2 und Firmenprospekt "Motorfeedback-Systeme für Servomotoren SINCOS SCS/SCM 60 und SCS/SCM 70" der Firma Max Stegmann GmbH, D-78156 Donaueschingen).

Aus DE 43 36 767 A1 ist ein Signalüberwachungsverfahren für die beiden phasenverschobenen Meßsignale solcher inkrementaler Positionsgeber bekannt.

Es wird von einem Kreis ausgegangen, der entsteht, wenn man die momentanen Werte von Sinus und Cosinus in ein Koordinatensystem einträgt (sogenannte Lissajous-Figur). Der Durchmesser beziehungsweise Radius dieses Kreises ist dabei vom Betrag der Amplituden der beiden Meßsignale abhängig. Zur Überwachung werden zwei Überwachungskreise mit einem größeren und einem kleineren Durchmesser festgelegt. Die Fläche innerhalb des Kreises mit dem kleineren Durchmesser gibt den Bereich an, in dem die Amplituden zu klein sind, um die Abtastsignale funktionsgerecht auswerten zu können. Der Bereich außerhalb des Kreises mit größerem Durchmesser gibt den Übersteuerungsbereich an, in dem die Signalamplituden zu groß sind. Zur Signalüberwachung wird der Betrag des aus beiden Meßsignalen resultierenden Signalvektors/Radius kontrolliert. Liegt er außerhalb der zulässigen Kreisringfläche, so wird ein Fehlersignal ausgegeben. Als Überwachungsmethode wird eine Betrachtung der zeitlichen Änderung des resultierenden Signalvektors vorgeschlagen. Dazu wird das Vorzeichen der Steigung einer zwei Meßwertpunkte verbindenden Geraden ermittelt.

Ein gattungsgemäßes Überwachungsverfahren ist aus EP 0 836 080 A1 bekannt. Es dient zur Prüfung einer Positionsmeßeinrichtung und deren positionsabhängiger Sinus- und Cosinus-Abtastsignale, insbesondere während des Einbaus des Abtastkopfes (Montagehilfe). Dazu werden Lissajous-Figuren gebildet, nachdem laufend nacheinander mehrere Wertepaare (Signalamplituden) beider Abtastsignale übernommen und aus jedem Wertepaar jeweils der momentane Radius der Lissajous-Figur errechnet wird. Aus einer bestimmten Anzahl von aufeinanderfolgend berechneten und abgespeicherten Radius-Werten wird jeweils der minimale Radius-Wert und der maximale Radius-Wert ermittelt. Auf einem Anzeigefeld wird ein kontinuierlicher Balken zwischen diesen beiden Extremwerten angezeigt. Ändert sich bei nachfolgenden Messungen und Berechnungen neuer Radius-Werte der Minimal- und der Maximalwert, so ändert sich auch der Bereich des Balkens. Zur Darstellung der Sollbreite des Balkens werden diesem zwei Grenzwert-Klammern überlagert. Dazu wird der Mittelwert aus mehreren aufeinanderfolgenden Radius-Werten berechnet. Die Lage einer linken Klammer wird dadurch ermittelt, daß vom Mittelwert 10 % abgezogen werden. Analog wird zur Berechnung der rechten Klammer verfahren. Die zulässige Toleranz ist dabei prozentual, d. h. relativ vorgegeben. So ändert sich der eingeschlossene Bereich zwischen den beiden Grenzklammern in Abhängigkeit vom momentanen Mittelwert.

Demgegenüber liegt der Erfindung die Aufgabe zugrunde, unter Vermeidung etwaiger Nachteilen des obigen Standes der Technik die Anwendungsbreite- und möglichkeiten von Positionsgeber-Überwachungsmethoden zu erweitern.

Zur Lösung wird bei einem Verfahren mit den eingangs genannten Merkmalen erfindungsgemäß vorgeschlagen, daß die obigen Verfahrensschritte a), b), c) und d) für eine laufende Überwachung und/oder Diagnose einer auf den Positionsgeber basierenden Lage-, Geschwindigkeits- und/oder Beschleunigungs-Regelung wiederholt verwendet werden. Die Verfahrensschritte werden also nicht, wie im Stand der Technik lediglich aufgezeigt, nur als Montage-Hilfseinrichtung zur Überprüfung der korrekten Anordnung des Positionsgebers eingesetzt; vielmehr werden sie erfindungsgemäß als automatisierter und interner Überwachungsmechanismus in den laufenden Betrieb eines Regelkreises für Lage, Geschwindigkeit und/oder Beschleunigung integriert. Ein damit erzielter Vorteil besteht darin, daß die Notwendigkeit eines spezifischen Anzeigefeldes in Form eines Balkendiagramms, welches in erster Linie für den Montagevorgang beim Positionsgeber nützlich ist, entfällt. Stattdessen kann intern eine Fehlermeldung an eine übergeordnete Leitsteuerung erzeugt werden, welche davon abhängig vorbestimmte Sicherheitsmaßnahmen anstoßen kann.

Die oberen und unteren Grenzwerte für die Signalamplituden, die sich gemäß dem Prinzip der Lissajous-Figuren als innerer und äußerer Überwachungskreis darstellen lassen (vgl. z.B. DE 43 36 767 A1, Spalte 2, Zeile 33 und 34), können über eine Initialisierung bzw. anfängliche Parametrierung für die gesamte Betriebsdauer fest vorgegeben und eingestellt sein. Aus Gründen der Fehlertoleranz ist es zweckmäßig, eine Fehlermeldung erst dann auszugeben, wenn einer der Überwachungsgrenzwerte beziehungsweise -kreise dreimal hintereinander über- bzw. unterschritten wird.

Die Praxistauglichkeit der Signalamplituden-Überwachung hängt entscheidend von der Einstellung dieser Überwachungsgrenzwerte ab. Werden die Grenzwerte beziehungsweise beiden Überwachungskreise zu eng gesetzt, können relativ geringfügige Störungen bereits eine Fehlermeldung auslösen, obwohl das Positionsgebersystem im wesentlichen gut funktionniert. Zu weit auseinander dimensionierte Überwachungsgrenzwerte führen dagegen zu einer möglicherweise zu langsamen Reaktionszeit der Überwachung. Damit ergibt sich das Problem, gegenüber vernachlässigbaren Fehlern tolerante Überwachungsgrenzwerte zu finden, die den Eigenheiten und spezifischen Randbedingungen unterschiedlicher Positionsgebertypen und sonstiger Hardware-Konstellationen Rechnung tragen. Selbst für unterschiedliche Betriebszustände (z.B. bei einem Elektroantrieb Gleichlauf, Reversierbetrieb und dgl.) sowie Verschleißzustände kann es entsprechend unterschiedlich optimale Einstellungen der Überwachungsgrenzwerte bzw. Überwachungskreise geben. Insbesondere kann sich die optimale Einstellung der Überwachungsgrenzwerte während der Lebens- und Betriebsdauer einer Positions- oder Antriebsregelung verändern.

Zur Lösung dieses Problemkreises wird im Rahmen einer besonderen Ausbildung der Erfindung vorgeschlagen, im Rahmen der laufenden Überwachung und/oder Diagnose der Regelung wiederholt die statistische Bewertung mehrerer vorher abgespeicherter Kontrollwerte zu erweitern und zu verfeinern. Dazu wird insbesondere vorgeschlagen, wiederholt ein Histogramm, Verteilungsgesetz oder eine sonstige Wahrscheinlichkeitsdichte über eine Mehr- bzw. Vielzahl vorher abgespeicherter Kontrollwerte zu bilden. Diese können dazu jeweils über mehrere Abtastzyklen gesammelt werden (sogenannter Adaptionszyklus). Die Anpassung des oberen und unteren Grenzwerts an den jeweils aktuellen Betriebs- oder Verschleißzustand des technischen Positionsregelprozesses läßt sich anhand einer Auswertung des (auf den jeweiligen Adaptionszyklus bezogenenen) Histogramms, Verteilungsgesetzes oder der jeweiligen Wahrscheinlichkeitsdichte durchführen. In Weiterführung dieses Gedankens werden wiederholt oder regelmäßig die Grenzwerte zu ihrer Adaption an Änderungen derart (neu) bestimmt, daß sie zumindest näherungsweise einer Intervallschachtelung des Verlaufs bzw. der Kurvenenden des Histogramms, Verteilungsgesetzes oder der Wahrscheinlichkeitsdichte entsprechen. Der von Null verschiedene Verlauf des Histogramms, Verteilungsgesetzes oder der Wahrscheinlichkeitsdichte bildet dabei den Kern des zu schachtelnden Intervalls, das dabei von den Überwachungsgrenzwerten auf einer Abszisse beidseits vorzugsweise möglichst eng begrenzt wird.

Zur Erhöhung der Genauigkeit und Verbesserung der Qualität der statistischen Auswertung ist es vorteilhaft, eine große Anzahl von Meßwerten bzw. Abtastzyklen zu erfassen und daraus mindestens 64, vorzugsweise ca. dreißigtausend Kontrollwerte pro Adaptionszyklus zu sammeln und auszuwerten.

Allerdings ergibt sich das Problem, daß mit der aufgezeigten, zyklischen Anpassung der Grenzwerte relativ langsame Signalverschlechterungen sich nicht erfassen lassen. Es kann durch die aufgezeigte, adaptive Anpassung auch zu einer Aufweitung der oberen und unteren Grenzbereiche bzw. innern und äußeren Überwachungskreise bis zu den physikalisch maximal möglichen Endwerten kommen. Es besteht so die Gefahr, daß die Überwachung der Signalamplituden im laufenden Betrieb praktisch funktionsuntüchtig wird. Eine solche Aufweitung der Überwachungskreise bzw. Ausdehnung der Überwachungsgrenzwerte wäre gleichbedeutend mit einer nicht akzeptablen Zunahme der Streuung bzw. Varianz der gemessenen Positionsgebersignale und der resultierenden Radius-Kontrollwerte beziehungsweise mit einer Abnahme sowohl der Güte der Gebersignale als auch der Effizienz der Überwachung selbst.

Um dieser Problematik zu begegnen, wird eine besonders vorteilhafte Ausbildung des erfindungsgemäßen Überwachungsverfahrens dahingehend vorgeschlagen, daß aus der genannten statistischen Bewertung die Varianz oder Standardabweichung vorzugsweise basierend auf einem Normalverteilungsmodell und/oder ein sonstiger Schwankungswert für die in einem Adaptionszyklus oder sonst vorher abgespeicherten Kontrollwerte ermittelt werden. Solche statistischen Kennwerte können dann mit einer vorbestimmten Obergrenze, die bei der Initialisierung als Parameter eingegeben wurde, verglichen werden. Bei Überschreitung läßt sich dann ein Fehlersignal generieren.

Zur Ermittlung der Streuung bzw. Varianz der Positionsgebersignale besteht im Rahmen der Erfindung eine vorteilhafte Möglichkeit darin, das Normalverteilungsmodell, deren wesentliche Parameter ja Varianz und Mittelwert sind, soweit wie möglich an das gemessene, reale Histogramm oder Verteilungsgesetz vorzugsweise in einem Adaptionszyklus gesammelter Kontrollwerte anzupassen bzw. anzunähern. Denn die Varianz ist ein Maß für die Güte der Positionsgebersignale, wenn diese normalverteilt sind.

Es ist zweckmäßig, bei Inbetriebnahme des Überwachungsverfahrens eine für den jeweiligen Gebertyp spezifische, maximal zulässige Varianz zu parametrieren. Dabei können auch noch Einbau- und/oder Betriebsbedingungen des Positionsgebers berücksichtigt werden.

Die allgemeine Idee der vorliegenden Erfindung umfaßt auch ein Computerprogramm mit Programmcodemitteln, um die Schritte des vorgenannten Überwachungsverfahrens durchzuführen, so bald das Programm auf einem Computer ausgeführt wird. Nach einer besonderen Ausbildung sind die Programmcodemittel auf einem computerlesbaren Datenträger abgespeichert.

Ferner liegt im Rahmen der allgemeinen erfinderischen Idee ein digitales Schaltwerk, insbesondere Rechen- und Steuerwerk (Prozessor) mit Speichereinrichtung, welche programm- und/oder schaltungstechnisch dazu eingerichtet sind, das Geber-Überwachungsverfahren durchzuführen. Erfindungsgemäß zeichnet sich das digitale Schaltwerk durch Schnittstellen zur zyklischen Aufnahme und Verarbeitung digitalisierter Sinus- und Cosinussignale sowie zur initialen Aufnahme der oberen und unteren Überwachungsgrenzwerte als Parameter und schließlich zur Ausgabe einer etwaigen, aus der Überwachung resultierenden Fehlermeldung aus. Gemäß einer besonderen Erfindungsausbildung ist das Schaltwerk noch zusätzlich mit einer Schnittstelle versehen, worüber ein oberer Schwell- oder Grenzwert für die Varianz bzw.

Streuung sich parametrieren läßt. Nach einer weiteren Ausbildung ist bei dem Schaltwerk ferner eine Schnittstelle zur Parametrierung bzw. Aufnahme der Anzahl der Abtastzyklen bzw. der Adapations-Zykluszeit eingerichtet, nach der der obere und untere Grenzwert mittels statistischer Auswertung anzupassen bzw. zu adaptieren ist.

Der Erfindungsrahmen umfasst auch die bauliche Integration des genannten Schaltwerks mit einem (an sich bekannten) Antriebsregler eines elektrischen Antriebssystems, der sich inbesondere durch Einrichtungen wie digitaler Signalprozessor mit Speicher und programmierbarer Logikanordnung (PLD) auszeichnet. Gemäß einer vorteilhaften Erfindungsausbildung ist bei diesem digitalen Antriebsregler das erfindungsfunktionelle Schaltwerk mit einer Speichereinrichtung realisiert, worin ein Software-Modul zur erfindungsgemäßen Positionsgeber-Überwachung mit den genannten Schnittstellen implementiert ist.

Weitere vorteilhafte Einzelheiten, Merkmale, Vorteile und Wirkungen auf der Basis der Erfindung ergeben sich aus der nachfolgenden Beschreibung eines bevorzugten Ausführungsbeispiels der Erfindung und den Zeichnungen. Diese zeigen in:

Figur 1      ein schematisches Strukturbild zur Geberüberwachung, baulich integriert mit einer elektrischen Antriebs- und Positionsregelung,

Figur 2      die Positionsgebersignale in der Kreisdarstellung als Lissajous-Figur,

Figur 3      ein Histogramm für dreißigtausend Meßwerte eines realen Positionsgebers, wobei auf der Abszisse der Array-Index äquidistant aufgetragen ist, während von der Ordinate (Y-Achse) die jeweilige Anzahl eingetroffener Meßwerte bestimmter Signalamplitude abgelesen werden kann,

Figur 4      ein Diagramm mit logarithmierten Meßwerten $Yp_j$ und die mittels Regression berechnete quadratische Modell-Funktion $Ym_j$ über einen relativen Index j, und

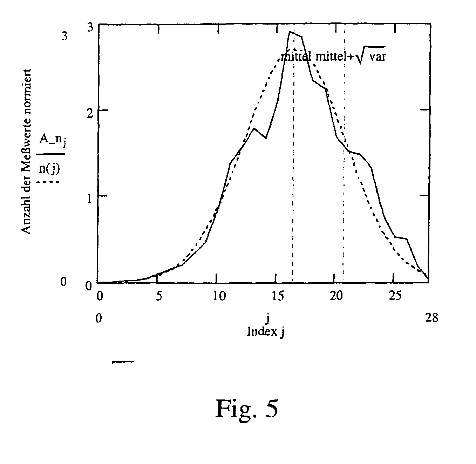

Figur 5      ein Diagramm entsprechender Darstellung mit der geschätzten bzw. angenäherten Normalverteilung norm (j) und des Verteilungsgesetzes der aus Messungen resultierenden Kontrollwerte $A_j$ jeweils über den relativen Index j.

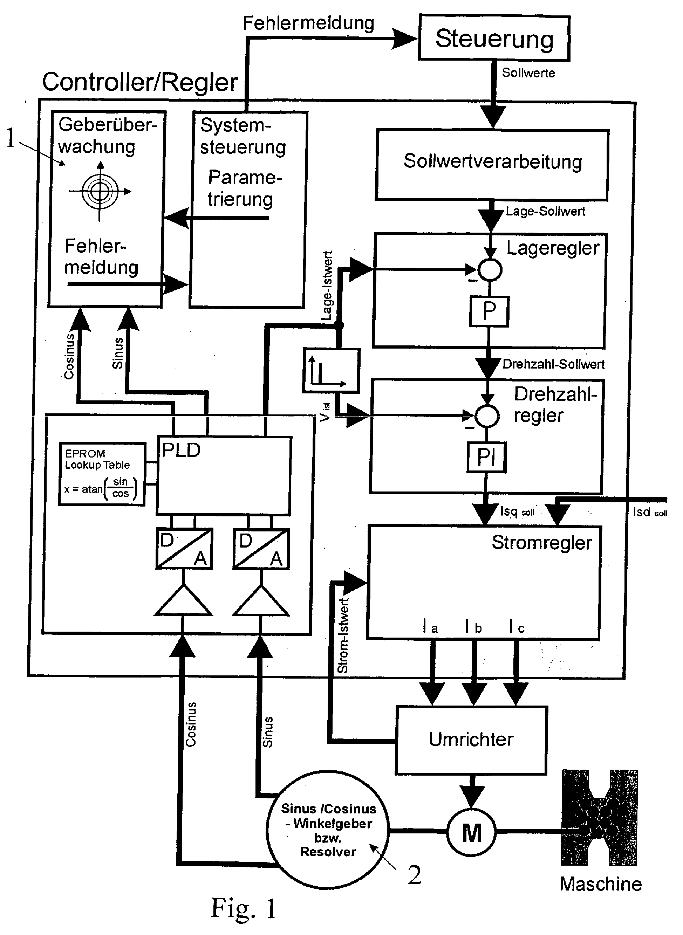

Gemäß Figur 1 ist in eine an sich bekannte Struktur eines digitalen Antriebsreglers für den Antriebsmotor M beispielsweise einer Druckmaschine ein Software-Modul 1 zur Geberüberwachung integriert. Es dient dazu, die Signale eines Winkelgebersystems bzw. Resolvers (als Positionsgeber 2) zu überwachen und auf Plausibilität zu kontrollieren. Im genannten Software-Modul 1 sind die Funktionen der Geberüberwachung soweit möglich implementiert. Das im folgenden beschriebene Überwachungsverfahren setzt voraus, daß der Positionsgeber 2 bezüglich Winkelpositionen mit synchronisierten Sinus- und Cosinus-Signalen arbeitet (wie beispielsweise bei Resolver- oder Sinus-/Cosinus-Inkrementalgebern bekannt).

Diverse Überwachungsfunktionen des Software-Moduls 1 "Geberüberwachung" lassen sich über binäre Register mit Steuerungsbits unabhängig voneinander aktivieren. Die Fehlermeldung aus dem Software-Modul 1 an eine Systemsteuerung ist nur dann möglich, wenn über weitere Steuerbits dies freigeben wurde. Die Sinus- und Cosinus-Signale des Positionsgebers 2, deren Amplituden überwacht werden sollen, werden gemäß gezeichnetem Ausführungsbeispiel durch eine programmierbare Logikanordnung PLD mit jedem Meßsignal vorgeschalteten Analog-Digitalwandlern an entsprechende Eingangsschnittstellen des Software-Moduls 1 zur Geberüberwachung durchgeschleift. Grundsätzlich ist es jedoch möglich, daß die Geberüberwachung aus dem Positionsgeber direkt (über Meßverstärker und Analog-Digitalwandler) mit den zueinander um 90° phasenverschobenen Sinus- und Cosinus-Meßsignalen gespeist wird.

Die erfindungsgemäße Überwachung der Amplituden der Sinus- und Cosinus-Signale erfolgt als Echtzeit-Task des Software-Moduls 1, d.h. die Task wird vorzugsweise bei jedem oder jedem zweiten Reglertakt (Abtastzyklus) zur Signalauswertung aufgerufen. Berechnet wird aus den gemessenen Sinus- und Cosinus-Spursignalen des Positionsgebers 2 ein Kontrollwert m gemäß nachstehender Gleichung:

$$m = \sin^2 + \cos^2$$

Für ideale Sinus- und Cosinus-Spurmeßsignale ist dieser Kontrollwert immer konstant. Werden die Sinus- und Cosinus-Spurmeßsignale an die X- und Y-Eingänge eines Oszilloskops gelegt, ergibt sich nach dem Prinzip der Lissajous-Figur ein Kreis. Mit den Wertebereichen für Sinus und Cosinus für eine A/D-Wandlerauflösung $G_{A/D}$ von 10 Bit ergibt sich:

$$G_{A/D} = 2^{10} - 1 = 1023$$

$$\sin, \cos = \{-G_{A/D}/2; ..; G_{A/D}/2\} = \{-511,5; ..; 511,5\}$$

$$idealerKreis = (G_{A/D}/2)^2 = 511,5^2 = 261632,25$$

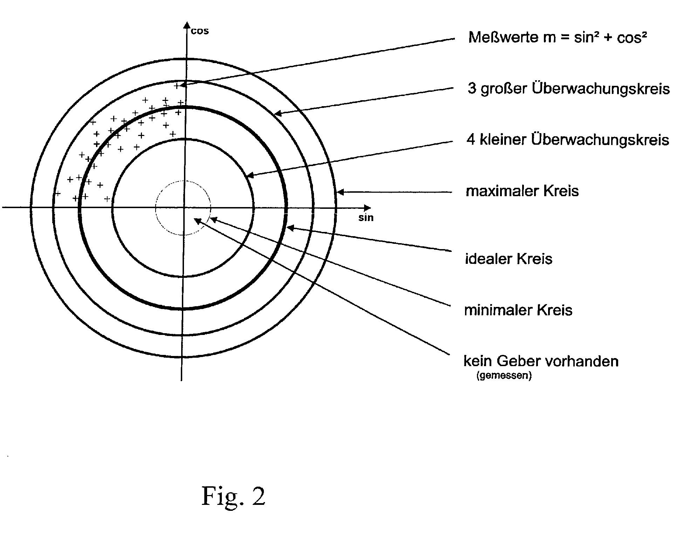

Jedoch sind in der Realität die Spur-Meßsignale des Positionsgebers 2 immer gestört, so daß die resultierenden Kontrollwerte m in einem Kreisringbereich zwischen zwei Kreisen, dem großen Überwachungskreis bzw. oberen Grenzwert 3 und dem kleinen Überwachungskreis bzw. unteren Grenzwert 4 liegen, wie in Figur 2 dargestellt. Wird beispielsweise einer der Überwachungskreise dreimal hintereinander über- bzw. unterschritten, wird eine Fehlermeldung generiert.

Die oben angesprochene Adaption der Überwachungsgrenzwerte 3, 4 bzw. der Überwachungskreise erfolgt mit Hilfe einer statistischen Auswertung einer großen Anzahl von Kontrollwerten m (vorzugsweise dreißigtausend). Aus den statistischen aufgezeichneten Kontrollwerten wird die Varianz bzw. Streuung mittelbar auch der Spursignale des Positionsgebers 2 berechnet. Die Varianz ist ein Maß für die Güte der Spursignale. Mit der adaptiven Nachführung der Grenzen der Überwachungskreise lassen sich für unterschiedliche Betriebszustände jeweils optimale Überwachungsgrenzen finden. Dazu muß sich der in Figur 1 dargestellte Antrieb in Drehung befinden, sonst lassen sich Messungen und eine Adaption nicht durchführen. Zudem müssen von der Systemsteuerung genügend tolerante Startwerte für die Überwachungskreise bzw. -grenzwerte festgelegt werden. Ferner kann mit dem Parameter "Adaptionszyklus" eingestellt werden, wieviele Spursignale des Positionsgebers aufgenommen und verarbeitet bzw. wieviele Kontrollwerte m berechnet und statistisch auf einmal ausgewertet werden sollen. Der Adaptionszyklus gibt an, innerhalb welcher (wiederholter) Zeiträume die Überwachungs-Grenzwerte 3, 4 nachgestellt werden sollen.

Zur statistischen Erfassung, Untersuchung und Darstellung der aufgenommenen und berechneten Kontrollwerte m in Echtzeit wird in besonderer Ausbildung des erfindungsgemäßen Verfahrens ein Array A[i] von beispielsweise N = 512 Werten verwendet. Die berechneten Kontrollwerte M werden auf dieses Array projiziert. Aus rechentechnischen Gründen ist dazu eine Eingrenzung auf die maximal und minimal möglichen Werte für den Kontrollwert m zweckmäßig. Der maximale Wert kann mit Hilfe der AD-Wandler Auflösung wie folgt bestimmt werden:

$$A_{max} = 2 \cdot (G_{A/D}/2)^2 = 523264,5$$

Der minimale Kreis kann willkürlich festgelegt werden, z. B.:

$$A_{min} = minimaler\ Kreis = 50$$

Sinnvollerweise wird $A_{min}$ gewählt, dass, wenn kein Geber vorhanden ist, die gemessenen Signale innerhalb des minimalen Kreises liegen. Der Array-Index i und damit die Stelle im Array, der ein Kontrollwert m zugeordnet wird, berechnet sich als Funktion von m wie folgt:

$$i = \frac{m}{A_{max} - A_{min}} \cdot N$$

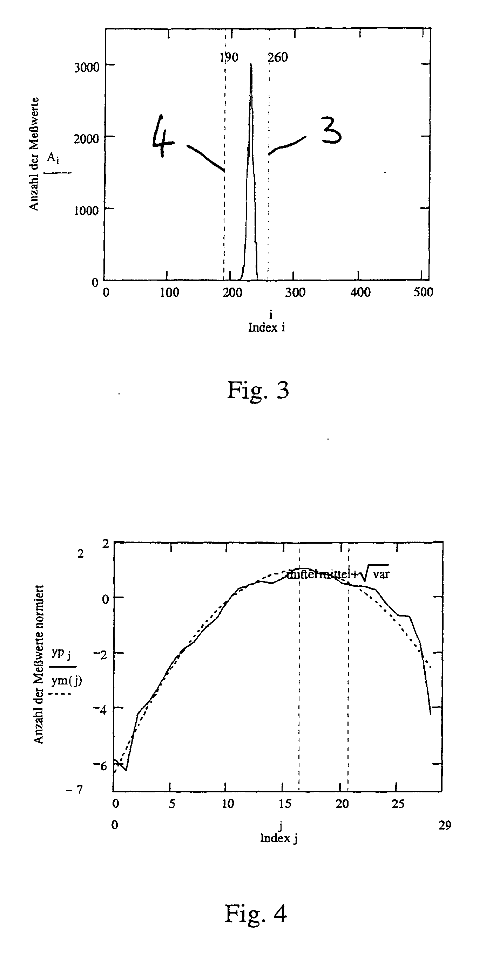

Nach dem Runden des Index i auf einen ganzzahligen Wert wird das Array-Element, das dem berechneten Index i zugeordnet ist, inkrementiert bzw. um 1 erhöht. Mit mehrmaliger Wiederholung dieses Vorgangs wird ein Histogramm generiert, wie in Figur 3 beispielsweise für einen SCS-70-Geber der Firma Stegmann mit 512 Strichen für dreißigtausend Meßwerte dargestellt.

Die oberen und unteren Grenzwerte 3, 4 bzw. Radien der Überwachungskreise sollten so gewählt werden, daß die in Figur 3 dargestellte, statistische Verteilungskurve möglichst eng geschachtelt oder sonstwie eingegrenzt wird. Dazu werden die Array-Elemente danach untersucht, welche von Null verschieden sind und jeweils den niedrigsten bzw. höchsten Indexwert aufweisen. Diese Indizes werden dann zur Bildung des unteren bzw. oberen Grenzindex OU_$i_{grenz}$ dekrementiert bzw. inkrementiert. Aus diesen Grenz-Indizes werden dann die oberen und unteren Grenzwerte 3, 4 prinzipiell gemäß folgender Gleichung berechnet:

$$OU\_W_{grenz} = \frac{A_{max} - A_{min}}{N} \cdot OU\_i_{grenz}$$

Zur Verhinderung von Fehlalarmen ist es zweckmäßig, die Grenzwerte OU_$w_{grenz}$ 3, 4 um 10 bis 20 % bezogen auf $A_{max}$ zu erhöhen bzw. zu erniedrigen. Zum Beispiel ergeben sich als Grenzwerte OU_$w_{grenz}$ mit den Grenzindizes 190 bzw. 260 aus Figur 3 die folgenden Werte:

$$Kleiner\ Überwachungskreis = 194161 - 15\ \%\ von\ A_{max}$$

$$Großer\ Überwachungskreis = 265694 + 15\ \%\ von\ A_{max}$$

Das Histogramm gemäß Figur 3 wird in wiederholten (Adaptions-)Zyklen jeweils neu bestimmt, und die Grenzwerte OU_$w_{grenz}$ in Echtzeit jeweils neu angepasst.

Die Varianz wird zu ihrer Überwachung in fünf Schritten berechnet.

Schritt 1:

Man nimmt an, die Signale des Positionsgebers 2 bzw. die Kontrollwerte m seien normalverteilt gemäß nachstehender Gleichung:

$$n(x) = C \cdot e^{\frac{-(x - mittel)^2}{2 \cdot var^2}}$$

mit C: Normierungskonstante; mittel:Mittelwert; var: Varianz

Schritt 2:

Das obige Histogramm gemäß Figur 3 wird auf den Flächeninhalt unter der Kurve normiert, um zu rechentechnischen Zwecken die Werte numerisch klein zu halten (auf Vermeidung von Überlauf bei Summenbildung). Dazu muß die Fläche unter den Werten im Array A [i] bzw. im Histogramm durch Integration bestimmt werden, z.B.:

$$A_{norm} = \frac{1}{N} \sum_i A(i)$$

mit der Normierung:

$$A_n(i) = \frac{A(i)}{A_{norm}}$$

Andere Normierungen, wie z.B. auf den maximalen Wert sind ebenfalls im Rahmen der Erfindung möglich.

$$A_{norm} = A_{max}$$

Schritt 3:

Nun ist das Normalverteilungsmodell n(x) möglichst gut an die aus den Meßwerten resultierenden Kontrollwerte m anzupassen. Dazu wird die an sich bekannte Methode der kleinsten Fehlerquadrate verwendet, wobei eine Gütefunktion V zu minimieren ist:

$$V = \sum_{i=0}^{N-1} e(x)^2 = \sum_{i=0}^{N-1} \left( y_p(x_i) - y_m(x_i) \right)^2 = Min$$

Da die Methode der kleinsten Fehlerquadrate für Exponentialfunktionen wie der Gaußschen Normalverteilung sehr kompliziert wird, werden nach einer Erfindungsausbildung zweckmäßigerweise die Kontrollwerte m und die Modellgleichung logarithmiert. Diese Vorgehensweise wird auch exponentielle Regression genannt. Für die Kontrollwerte $y_p(X_i)$ gilt dann:

$$y_p(x_i) = \ln(A_n(i))$$

Die Gleichung des Normalverteilungsmodells entspricht nach dem Logarithmieren einer Parabelgleichung. Dies wird aus der nachstehenden Umwandlung deutlich:

$$n(x_i) = e^{\frac{-(x-mittel)^2}{2 \cdot var^2}} \cdot e^k = e^{\frac{-(x-mittel)^2}{2 \cdot var^2}+k} \text{, mit: } C = e^k.$$

Dann läßt sich für das Normalverteilungsmodell schreiben:

$$y_m(x_i) = \ln(n(x_i)) = \frac{-(x_i - mittel)^2}{2 \cdot var^2} + k = a \cdot x_i^2 + b \cdot x_i + c$$

Durch Koeffizientenvergleich ergibt sich der nachstehende Zusammenhang zwischen den Parametern der Parabelgleichung a, b, c und den Modellparametern var, mittel und C:

$$var = \sqrt{-\frac{1}{2a}}, \qquad mittel = \frac{-b}{2a}, \qquad C = e^{c - \frac{b^2}{4a}}$$

Mit der Parabelgleichung als Modell kann die Methode der kleinsten Fehlerquadrate effizient angewendet werden.

In Figur 4 sind die logarithmierten Meßwerte $Yp_j$ und die mittels Regression berechnete quadratische Funktion $Ym_j$ dargestellt. Auf der x-Achse (Abszisse) ist jetzt ein relativer Index j angegeben. Aus rechentechnischen Gründen wird nicht die gesamte Verteilungskurve zur Varianzberechnung herangezogen.

Schritt 4:

Zur Kontrolle wird nun die Summe der quadratischen Fehler V berechnet.

$$V = \frac{1}{N} \cdot \sum_j \left(A_n(j) - n(j)\right)^2$$

Der Wert von V ist ein Maß für die Qualität der Anpassung des Modells an die aus den Positionsgeber-Meßwerten resultierenden Kontrollwerte. Je näher die statistische Verteilung der Kontrollwerte einer Normalverteilung kommt, desto kleiner wird die Summe der Fehlerquadrate.

In Bild 5 sind die geschätzte Normalverteilung norm(j) und die statistisch im Histogramm erfassten, normierten Messungen bzw. Kontrollwerte $An_j$ dargestellt. Dabei betragen var = 6,7, mittel = 12,1, C = 1,57 und die Güte V = 0,094.

Schritt 5:

Die Varianz wird entweder in die Einheit der Meßwerte, d.h. in Inkremente, oder einheitenlos in % dargestellt.

$$var_n = \frac{var}{N}, \text{ in[\%], bzw.}$$

$$var_{Inc} = var_n \cdot \left(A_{max} - A_{min}\right), \text{ in[Inc].}$$

Wären die Meßwerte bzw. die resultierenden Kontrollwerte nicht normalverteilt, sondern gleichverteilt, dann würde die berechnete Parabel sich an eine Gerade annähern und die Varianz gegen unendlich gehen. Nimmt man an, es gäbe zwei ausgeprägte Spitzen in den Meß- bzw. Kontrollwerten, dann würde die Parabel umkippen und mit der Öffnung nach oben zeigen. Die Varianz würde in diesem Fall negative Werte annehmen.

Grundsätzlich gilt also, daß für kleine positive Varianzwerte die Signalqualität aus dem Positionsgeber gut, für große oder sogar negative Werte schlecht ist.

Um zu verhindern, daß eine langsame Signalverschlechterung nicht registriert wird, und die Überwachungsgrenzen bis zum maximal bzw. minimal möglichen Überwachungskreis ausgewertet werden würden, wird gemäß einer Erfindungsausgestaltung für jeden Gebertyp eine spezifische maximal zulässige Varianz parametriert. Bei Überschreitung dieser Varianz wird dann durch das Software-Modul "Geberüberwachung" eine Fehlermeldung ausgelöst.

**Bezugszeichenliste**

M    Antriebsmotor
1     Software-Model für Geberüberwachung
2     Positionsgeber
3     oberer Grenzwert
4     unterer Grenzwert

**Patentansprüche**

**1.** Verfahren zur Echtzeit-Überwachung von Amplituden gegeneinander phasenverschobener, sinus- und cosinusartiger Meßsignale eines inkrementalen Positionsgebers (2) oder Drehmelders, mit folgenden Verfahrensschritten:

a) zyklische Abtastung und rechnerische Verarbeitung und Verknüpfung der Meßsignale zur Bildung eines den Meßwertamplituden gemeinsamen Kontrollwerts m pro Abtastzyklus,
b) Bestimmung eines oberen und eines unteren Grenzwerts anhand einer statistischen Bewertung mehrerer vorher abgespeicherter Kontrollwerte
c) Vergleich des jeweiligen Kontrollwerts mit dem oberen und dem unteren Grenzwert (3,4) zu Überwachungszwecken
d) Generierung eines Fehlersignals, wenn der Kontrollwert m den oder die Grenzwerte einmal oder mehrmals überschreitet

**dadurch gekennzeichnet, daß** die Schritte a), b), c) und d) für eine laufende Überwachung und/oder Diagnose einer auf den den Positionsgeber (2) basierenden Lage-, Geschwindigkeits- und/oder Beschleunigungs-Regelung wiederholt verwendet werden, und im Fehlerfall eine Fehlermeldung_ an eine übergeordnete Steuerung erzeugt wird, damit diese davon abhängig vorbestimmte Sicherheitsmaßnahmen anstößt.

**2.** Verfahren nach Anspruch 1, **dadurch gekennzeichnet, dass** im Rahmen der laufenden Überwachung und/oder Diagnose der Regelung wiederholt ein Histogramm, Verteilungsgesetz oder eine sonstige Wahrscheinlichkeitsdichte über die Kontrollwerte m gebildet wird, die dazu jeweils über mehrere Abtastzyklen gesammelt werden, und der obere und der untere Grenzwert (3,4) anhand einer Auswertung des jeweils Histogramms, Verteilungsgesetzes oder der jeweiligen Wahrscheinlichkeitsdichte bei deren Änderung adaptiert werden.

**3.** Verfahren nach Anspruch 2, **dadurch gekennzeichnet, dass** die Grenzwerte (3,4) zu ihrer Adaption derart bestimmt oder verändert werden, dass sie zumindest näherungsweise einer Art Intervallschachtelung des Verlaufs beziehungsweise des von den Kurvenenden des Histogramms, Verteilungsgesetzes oder der Wahrscheinlichkeitsdichte begrenzten Bereichs entsprechen.

**4.** Verfahren nach Anspruch 2 oder 3, **dadurch gekennzeichnet, dass** zur Bildung des Histogramms, Verteilungsgesetzes oder der Wahrscheinlichkeitsdichte mindestens 64, vorzugsweise etwa dreißigtausend Kontrollwerte m gesammelt und ausgewertet werden.

**5.** Verfahren nach einem der Ansprüche 2 bis 4, **dadurch gekennzeichnet, dass** zur Bildung des Histogramms, Verteilungsgesetzes oder der Wahrscheinlichkeitsdichte die über mehrere Abtastzyklen gesammelten Kontrollwerte m über ein Array mit N Array-Elementen und diesen jeweils zugeordneten Array-Indizes i ausgewertet werden, indem zum jeweils aus einer Abtastung resultierenden Kontrollwert m ein Array-Index i wie folgt berechnet wird:

$$i = m * N / (Amax - Amin),$$

wobei N die Anzahl der Array-Elemente, Amax der maximal mögliche oder maximal zulässige Kontrollwert und Amin der minimal mögliche oder minimal zulässige Kontrollwert sind,
und dann das dem berechneten Index zugeordnete Array-Element inkrementiert wird.

6. Verfahren nach Anspruch 5, **dadurch gekennzeichnet, dass** entsprechend der genannten Intervallschachtelung ein oberer und unterer Array-Index OU_igrenz bestimmt werden, indem die jeweils von Null verschiedenen Array-Elemente mit niedrigstem und höchstem Indexwert ermittelt werden, diese Indizes zur Bildung von dem unteren und oberen Grenzindex OU_igrenz dekrementiert beziehungsweise inkrementiert werden, und die oberen und unteren Grenzwerte OU_wgrenz wie folgt berechnet werden: OU_wgrenz = (Amax - Amin) * OU_igrenz / N.

7. Verfahren nach Anspruch 6, **dadurch gekennzeichnet, dass** der obere und/oder untere Grenzwert nach Berechnung noch um 5 bis 25 %, vorzugsweise um 10 bis 20 % erweitert wird.

8. Verfahren nach einem der vorangehenden Ansprüche, **dadurch gekennzeichnet, dass** im Rahmen der laufenden Überwachung und/oder Diagnose der Regelung aus der statistischen Bewertung oder Auswertung die Varianz oder Standardabweichung und/oder ein sonstiger Schwankungswert für die vorher abgespeicherten Kontrollwerte ermittelt und mit einer vorbestimmten Obergrenze verglichen werden, und bei deren Überschreiten ein Fehlersignal generiert wird.

9. Verfahren nach Ansprüche 2 und 8, **dadurch gekennzeichnet, dass** eine Dichtefunktion norm(x) eines auf einer statistischen Normalverteilung basierenden Näherungssmodells an das Histogramm, Verteilungsgesetz oder die Wahrscheinlichkeitsdichte der Kontrollwerte angepaßt oder angenähert wird, und aus der angepaßten Dichtefunktion die Varianz für die Kontrollwerte hergeleitet wird.

10. Verfahren nach Anspruch 9, **dadurch gekennzeichnet, dass** die Anpassung oder Annäherung über die Methode der kleinsten Fehlerquadrate unter Minimierung einer Gütefunktion erfolgt.

11. Verfahren nach Anspruch 9 oder 10, **dadurch gekennzeichnet, dass** die angepaßte Dichtefunktion oder deren Parameter Mittelwert und/oder Varianz mit Hilfe eines mittels exponentieller Regression berechneten mathematischen Modells, vorzugsweise einer quadratischen beziehungsweise parabolischen Funktion, ermittelt werden.

12. Verfahren nach Anspruch 11, **dadurch gekennzeichnet, dass** die Parameter Mittelwert und/oder Varianz durch Vergleich mit den Koeffizienten der quadratischen beziehungsweise parabolischen Funktion gewonnen werden.

13. Verfahren nach Anspruch 12, **dadurch gekennzeichnet, dass** die Koeffizienten der quadratischen beziehungsweise parabolischen Funktion durch die Methode der kleinsten Fehlerquadrate unter Minimierung einer Gütefunktion optimiert werden.

14. Verfahren nach einem der Ansprüche 8 bis 13, **dadurch gekennzeichnet, dass** die Obergrenze für die Varianz oder Schwankungsbreite abhängig vom Typ des jeweiligen Positionsgebers (2) und/oder von dessen Einbau- und/oder dessen Betriebsbedingungen vorbestimmt wird.

15. Computerprogramm mit Programmcodemitteln, um alle Verfahrensschritte nach einem der vorangehenden Ansprüche durchzuführen, wenn das Programm auf einem Computer ausgeführt wird.

16. Computerprogramm mit Programmcode-Mitteln gemäß Anspruch 15, die auf einem computerlesbaren Datenträger gespeichert sind.

17. Digitales Schaltwerk, insbesondere Rechen-und Steuerwerk mit Speichereinrichtung, programm- und/oder schaltungstechnisch eingerichtet zur Durchführung des Geber-Überwachungsverfahrens nach einem der vorangehenden Ansprüche, **gekennzeichnet durch** Schnittstellen zur zyklischen Aufnahme und Verarbeitung digitalisierter Sinus- und Cosinus-Signale, zur Initialisierung beziehungsweise Parametrierung der oberen und unteren Grenzwerte (3,4) und zur Ausgabe einer etwaigen, aus der Überwachung resultierenden Fehlermeldung.

18. Schaltwerk nach Anspruch 17 zur Durchführung des Verfahren nach einem der Ansprüche 8 bis 14, **gekennzeichnet durch** eine Schnittstelle zur Parametrierung beziehungsweise Aufnahme eines oberen Grenzwerts für die Varianz.

19. Schaltwerk nach Anspruch 17 oder 18 zur Durchführung des Verfahren nach einem der Ansprüche 8 bis 14, **gekennzeichnet durch** eine Schnittstelle zur Parametrierung beziehungsweise Aufnahme der Anzahl der Abtastzyklen beziehungsweise der Adaptions-Zykluszeit, nach der der obere und untere Grenzwert mittels statistischer Auswertung angepaßt beziehungsweise adaptiert wird.

20. Schaltwerk nach Anspruch 17, 18 oder 19, **gekennzeichnet durch** eine bauliche Integration mit einem digitalen Antriebsregler eines elektrischen Antriebssystems.

21. Digitaler Antriebsregler mit dem Schaltwerk nach einem der Ansprüche 17 bis 20, **dadurch gekennzeichnet, dass** das Schaltwerk mit einer Speichereinrichtung realisiert ist, worin ein Softwaremodul (1) zu der Positionsgeber-Überwachung mit den genannten Schnittstellen implementiert ist.

## Claims

1. A method for the real-time monitoring of amplitudes of sine- and cosine-type measurement signals, out of phase in relation to one another, of an incremental position generator (2) or position transmitter, comprising the following method steps:

   a) cyclical sampling and calculational processing and linking of the measurement signals in order to form a control value m common to the measurement amplitudes for each sampling cycle,
   b) determining an upper and a lower threshold based on a statistical evaluation of a number of previously stored control values,
   c) comparing the respective control value with the upper and the lower threshold (3, 4) for monitoring purposes,
   d) generating a fault signal if the control value m exceeds the threshold or thresholds once or a number of times,

   **characterised in that** steps a), b), c) and d) are used repeatedly for ongoing monitoring and/or diagnosis of position, speed and/or acceleration regulation based upon the position generator (2), and in the event of a fault a fault signal is generated at a superordinate control so that the latter initiates predetermined safety measures dependently upon the latter.

2. The method according to Claim 1, **characterised in that** within the framework of the ongoing monitoring and/or diagnosis of the regulation a histogram, distribution law or some other probability density is formed by means of the control values m which, for this purpose, are respectively collected over a number of sampling cycles, and the upper and the lower threshold (3, 4) are adapted by means of an evaluation of the respective histogram, distribution law or the respective probability density when the latter change.

3. The method according to Claim 2, **characterised in that** the thresholds (3, 4) are determined or changed for their adaption such that they correspond at least approximately to a type of nested intervals of the process or the range limited by the curve ends of the histogram, distribution law or the probability density.

4. The method according to Claim 2 or 3, **characterised in that** in order to form the histogram, distribution law or probability density, at least 64, preferably approximately thirty thousand control values m are collected and evaluated.

5. The method according to any of Claims 2 to 4, **characterised in that** in order to form the histogram, distribution law or probability density, the control values m collected over a number of sampling cycles over an array with N array elements and array indices i respectively assigned to the latter are evaluated, for the control value m respectively resulting from sampling an array index i being calculated as follows:

$$i = m * N/(Amax - Amin),$$

N being the number of array elements, Amax the maximum possible or maximum permissible control value, and Amin being the minimum possible or minimum permissible control value,
and the array element assigned to the calculated index then being incremented.

6. The method according to Claim 5, **characterised in that** according to the aforementioned nested intervals an upper and lower array index UL_ithreshold are determined by the respective array elements different from zero with the lowest and highest index value being determined, these indices being decremented or incremented in order to form UL_ithreshold from the upper and lower threshold index, and the upper and lower thresholds UL_wthreshold being calculated as follows: UL_wthreshold = (Amax - Amin) * UL_ithreshold / N.

7. The method according to Claim 6, **characterised in that** the upper and/or lower threshold is extended further after calculation by 5 to 25%, preferably by 10 to 20%.

8. The method according to any of the preceding claims, **characterised in that** within the framework of the ongoing monitoring and/or diagnosis of the regulation from the statistical evaluation or analysis the variance or standard deviation and/or some other fluctuation value for the previously stored control values is determined and compared with a predetermined upper threshold, and when the latter are exceeded a fault signal is generated.

9. The method according to Claims 2 and 8, **characterised in that** a density function standard(x) of an approximation model based on a statistical normal distribution is adjusted or approximated to the histogram, distribution law or probability density of the control values, and the variance for the control values is derived from the adjusted density function.

10. The method according to Claim 9, **characterised in that** the adjustment or approximation takes place by means of the method of the smallest fault squares minimising a quality function.

11. The method according to Claim 9 or 10, **characterised in that** the adjusted density function or the average value and/or variance of the parameters of the latter are determined with the aid of a mathematical model calculated by means of exponential regression, preferably a quadratic or parabolic function.

12. The method according to Claim 11, **characterised in that** the average value and/or variance of the parameters are obtained by comparing with the coefficients of the quadratic or parabolic function.

13. The method according to Claim 12, **characterised in that** the coefficients of the quadratic and parabolic function are optimised by the method of the smallest fault squares minimising a quality function.

14. The method according to any of Claims 8 to 13, **characterised in that** the upper threshold for the variance or fluctuation breadth is predetermined dependently upon the type of respective position generator (2) and/or the installation and/or operating conditions of the latter.

15. A computer programme with programme code means in order to implement all of the method steps according to any of the preceding claims if the programme is implemented in a computer.

16. The computer programme with programme code means according to Claim 15 which are stored on a computer-readable data carrier.

17. A digital switchgear, in particular a computing and control unit with a storage device, set up programmatically and/or electrically in order to implement the transmitter monitoring method according to any of the preceding claims, **characterised by** interfaces for the cyclical recording and processing of digitalised sine and cosine signals, in order to initialise and parameterise the upper and lower thresholds (3,4) and to issue any fault signal resulting from the monitoring.

18. The switchgear according to Claim 17 for implementing the method according to any of Claims 8 to 14, **characterised by** an interface for parameterising or recording an upper threshold for the variance.

19. The switchgear according to Claim 17 or 18 for carrying out the method according to any of Claims 8 to 14, **characterised by** an interface for parameterising or recording the number of sampling cycles or the adaption cycle time after which the upper and lower threshold is adjusted or adapted by means of statistical evaluation.

20. The switchgear according to Claim 17, 18 or 19, **characterised by** a structural integration with a digital drive control system of an electrical drive system.

21. A digital drive control system with the switchgear according to any of Claims 17 to 20, **characterised in that** the switchgear is produced with a storage device, wherein a software module (1) for the position generator monitoring is implemented with the aforementioned interfaces.

**Revendications**

**1.** Procédé de surveillance en temps réel d'amplitudes de signaux de mesure de types sinusoïdaux et cosinusoïdaux, déphasés l'un de l'autre, d'un capteur de position incrémental (2) ou d'un synchro-transmetteur, comprenant les étapes de procédé suivantes :

a) balayage cyclique et traitement et enchaînement numériques des signaux de mesure pour former une valeur de contrôle m commune aux amplitudes de valeurs de mesure par cycle de balayage,
b) détermination d'une valeur limite supérieure et d'une valeur limite inférieure à l'aide d'une évaluation statistique de plusieurs valeurs de contrôle enregistrées auparavant,
c) comparaison de la valeur de contrôle respective avec la valeur limite supérieure et la valeur limite inférieure (3,4) à des fins de surveillance,
d) génération d'un signal d'erreur si la valeur de contrôle m dépasse la ou les valeurs limites une ou plusieurs fois,

**caractérisé en ce que** les étapes a), b), c) et d) sont employées de manière répétée pour une surveillance et/ou un diagnostic en continu d'un réglage de position, de vitesse et/ou d'accélération s'appuyant sur le capteur de position (2) et, en cas d'erreur, un message d'erreur est généré sur une commande prioritaire pour que celle-ci déclenche des mesures de sécurité prédéterminées correspondantes.

**2.** Procédé selon la revendication 1, **caractérisé en ce que**, dans le cadre de la surveillance et/ou du diagnostic en continu du réglage, il se forme de manière répétée un histogramme, une loi de distribution ou une autre densité de probabilité sur les valeurs de contrôle m, qui sont accumulées à cet effet respectivement sur plusieurs cycles de balayage, et **en ce que** les valeurs limites supérieure et inférieure (3,4) sont adaptées par exploitation de l'histogramme respectif, de la loi de distribution ou de la densité de probabilité respective lors de leur modification.

**3.** Procédé selon la revendication 2, **caractérisé en ce que** les valeurs limites (3,4) sont déterminées ou modifiées pour leur adaptation de sorte qu'elles correspondent au moins approximativement à un type de chevauchement d'intervalles du tracé ou de la zone délimitée par les extrémités de courbe de l' histogramme, de laloidedistributionoude la densité de probabilité.

**4.** Procédé selon la revendication 2 ou 3, **caractérisé en ce que**, pour former l'histogramme, la loi de distribution ou la densité de probabilité, au moins 64, de préférence environ trente milles valeurs de contrôle m sont accumulées et exploitées.

**5.** Procédé selon l'une quelconque des revendications 2 à 4, **caractérisé en ce que**, pour former l'histogramme, la loi de distribution ou la densité de probabilité, les valeurs de contrôle m accumulées sur plusieurs cycles de balayage sont exploitées via un réseau à N éléments de réseau et avec un indice de réseau i affecté respectivement à ceux-ci en calculant un indice de réseau i pour la valeur de contrôle m résultant respectivement d'un balayage de la manière suivante :

$$i = m * N / (Amax - Amin),$$

où N est le nombre d'éléments de réseau, Amax est la valeur de contrôle maximale possible ou maximale autorisée et Amin est la valeur de contrôle minimale possible ou minimale autorisée,
et en incrémentant ensuite l'élément de réseau affecté à l'indice calculé.

**6.** Procédé selon la revendication 5, **caractérisé en ce qu'**en fonction du chevauchement d'intervalles cité, un indice de réseau supérieur et un indice de réseau inférieur OU_ilimite sont déterminés en établissant les éléments de réseau respectivement différents de zéro avec la valeur d'indice la plus basse et celle la plus élevée, en décrémentant ou en incrémentant ces indices pour former l'indice limite inférieur et l'indice limite supérieur OU_ilimite et en calculant les valeurs limites supérieure et inférieure OU_wlimite de la manière suivants :

$$OU\_wlimite = (Amax - Amin) * OU\_ilimite /N.$$

**7.** Procédé selon la revendication 6, **caractérisé en ce que** la valeur limite supérieure et/ou inférieure est ou sont augmentées après calcul encore de 5 à 25 %, de préférence de 10 à 20 %.

8. Procédé selon l'une quelconque des revendications précédentes, **caractérisé en ce que**, dans le cadre de la surveillance et/ou du diagnostic en continu du réglage à partir de l'évaluation ou de l'exploitation statistique, la variance ou l'écart type et/ou une autre valeur de fluctuation est ou sont établis pour les valeurs de contrôle enregistrées auparavant et est ou sont comparés à une limite supérieure prédéterminée et **en ce qu'**un message d'erreur est généré lors de leur dépassement.

9. Procédé selon les revendications 2 et 8, **caractérisé en ce qu'**une fonction de densité norm(x) d'un modèle d'approximation s'appuyant sur une distribution normale statistique est ajustée ou alignée sur l'histogramme, la loi de distribution ou la densité de probabilité des valeurs de contrôle et **en ce que** la variance pour les valeurs de contrôle est dérivée de la fonction de densité ajustée.

10. Procédé selon la revendication 9, **caractérisé en ce que** l'ajustement ou l'alignement s'effectue par la méthode des moindres carrés d'erreurs tout en minimisant une fonction de qualité.

11. Procédé selon la revendication 9 ou 10, **caractérisé en ce que** la fonction de densité ajustée ou ses paramètres de valeur moyenne et/ou de variance es ou /sont établis à l'aide d'un modèle mathématique calculé par régression exponentielle, de préférence d'une fonction carrée ou parabolique.

12. Procédé selon la revendication 11, **caractérisé en ce que** les paramètres de valeur moyenne et/ou de variance sont obtenus par comparaison avec les coefficients de la fonction carrée ou parabolique.

13. Procédé selon la revendication 12, **caractérisé en ce que** les coefficients de la fonction carrée ou parabolique sont optimisés par la méthode des moindres carrés d'erreurs tout en minimisant une fonction de qualité.

14. Procédé selon l'une quelconque des revendications 8 à 13, **caractérisé en ce que** la limite supérieure pour la variance ou la largeur de fluctuation est prédéterminée en fonction du type de capteur de position respectif (2) et/ou de ses conditions de montage et/ou de fonctionnement.

15. Programme informatique comprenant des moyens de code de programme pour réaliser toutes les étapes du procédé selon l'une quelconque des revendications précédentes, si le programme est exécuté sur un ordinateur.

16. Programme informatique comprenant des moyens de code de programme selon la revendication 15, qui sont enregistrés sur un support de données lisible sur ordinateur.

17. Circuit de commutation numérique, en particulier circuit de calcul et de commande, comprenant un dispositif de mémorisation, aménagé au plan de la technique de programmation et/ou de commutation pour mettre en oeuvre le procédé de surveillance par capteur selon l'une quelconque des revendications précédentes, **caractérisé par** des interfaces pour la réception cyclique et le traitement de signaux sinusoïdaux et cosinusoïdaux numérisés, pour l'initialisation ou le paramétrage des valeurs limites supérieure et inférieure (3,4) et pour la délivrance d'un message d'erreur éventuel résultant de la surveillance.

18. Circuit de commutation selon la revendication 17 pour mettre en oeuvre le procédé selon l'une quelconque des revendications 8 à 14, **caractérisé par** une interface pour paramétrer ou recevoir une valeur limite supérieure pour la variance.

19. Circuit de commutation selon la revendication 17 ou 18 pour mettre en oeuvre le procédé selon l'une quelconque des revendications 8 à 14, **caractérisé par** une interface pour paramétrer ou recevoir le nombre de cycles de balayage ou la durée de cycle d'adaptation, selon laquelle les valeurs limites supérieure et inférieure sont ajustées ou adaptées par exploitation statistique.

20. Circuit de commutation selon les revendications 17, 18 ou 19, **caractérisé par** une intégration structurelle avec un régulateur d'entraînement numérique d'un système d'entraînement électrique.

21. Régulateur d'entraînement numérique comprenant le circuit de commutation selon l'une quelconque des revendications 17 à 20, **caractérisé en ce que** le circuit de commutation est réalisé avec un dispositif de mémorisation, dans lequel est implémenté un module de logiciel (1) pour la surveillance du capteur de position avec les interfaces citées.

Fig. 1

Meßwerte m = sin² + cos²

3 großer Überwachungskreis

4 kleiner Überwachungskreis

maximaler Kreis

idealer Kreis

minimaler Kreis

kein Geber vorhanden
(gemessen)

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4331151 C2
- DE 4336767 A1
- EP 0836080 A1